# EUROPÄISCHE PATENTANMELDUNG

(11) **EP 1 365 146 A2**
(43) Veröffentlichungstag der Anmeldung: **26.11.2003**
(21) Anmeldenummer: 03450121.3
(22) Anmeldetag: 16.05.2003
(51) Int. Cl.: F03B 13/10

(54) **Antriebsverbindung für Strömungsmaschinen**

(30) Priorität: 23.05.2002 AT 3252002 U
(71) Anmelder: Federspiel Ökotechnology Consulting GmbH, 1140 Wien (AT)
(72) Erfinder: Federspiel, Helmut, 1140 Wien (AT)
(74) Vertreter: Rippel, Andreas

(57) **Zusammenfassung**

Bei einer Anlage mit einer als Strömungsmaschine (7, 11) ausgebildeten Kraftmaschine und einer hievon angetriebenen Maschine, insbesondere einem elektrischen Generator (G) ist zur Antriebsverbindung der beiden Maschinen (7,11;G) ein Fluidgetriebe (4,5,6) angeordnet.

Dadurch können insbesondere die Kosten einer Anlage gesenkt werden. Aber auch andere Vorteile werden erreicht.

## Beschreibung

Die Erfindung bezieht sich auf eine Anlage nach dem Oberbegriff des Anspruches 1.

Die Drehzahl einer einzelnen Wasserturbine ist eine Funktion des Durchflusses, der Fallhöhe, des Laufraddurchmessers und des Turbinentyps. Die Synchrondrehzahl des Generators hängt von der Netzfrequenz und der Anzahl der Pole ab. Durch die Festlegung der Turbinenparameter werden damit auch die Abmessungen des Generators, insbesondere die Polzahl und deren Länge bestimmt.

Für niedrige Fallhöhen ergeben sich folgende Nachteile für herkömmliche Konstruktionen:

Wenn der Generator mit der Turbine starr über eine Welle gekuppelt ist, kann seine Drehzahl und die Anzahl der Pole nicht mehr frei gewählt werden. Vielfach muss bei der Auslegung ein Kompromiss zwischen optimaler Turbinen- und optimaler Generatordrehzahl gefunden werden. Der Durchmesser und die Länge des Generators bestimmen maßgeblich das Gewicht der Erzeugungseinheit. Außerdem werden durch die Abmessungen des Generators bei horizontalen Achslagen auch die Dimensionen des Kraftwerkes mitbestimmt. Aufgrund der Gewichts- und Durchmesserbeschränkungen, können die rotierenden Massen meist auch nicht den für einen Inselbetrieb notwendigen Wert erreichen.

Wird zwischen Turbine und Generator ein Getriebe eingebaut, kann über die entsprechende Übersetzung sowohl mit der optimalen Turbinen- als auch mit der optimalen Generatordrehzahl gearbeitet werden.

Für beide Konstruktionen gilt, dass, sobald die entsprechenden Drehzahlen festgelegt sind, der Maschinensatz nur mehr über eventuell vorhandene Einrichtungen zur Laufrad und/oder Leitradverstellung oder über einen Frequenzumrichter an geänderte Durchströmbedingungen angepasst werden kann.

Für einen neuen Kraftwerkstyp, der das vorhandene Wasserdargebot auf mehrere kleine Turbinen aufteilt, eignen sich die oben beschriebenen Antriebsmöglichkeiten nur bedingt. Bei horizontaler Achslage und direkt gekuppelten Generator bestimmen dessen Abmessungen maßgeblich das Gewicht und die Kosten des Maschinensatzes. Außerdem muss unter allen Umständen das Eindringen von Wasser in den Generator verhindert werden. Wird der dazugehörige Generator oder die dazugehörigen Generatoren über Getriebe und Wellen mit den Turbinen verbunden, muss ein entsprechend hoher Aufwand für die Ein- und Entkupplung des einzelnen Maschinesatzes betrieben werden.

Diese Überlegungen gelten in ähnlicher Form auch für andere Strömungsmaschinen, z.B. Windkraftmaschinen.

Die Erfindung hat es sich zum Ziel gesetzt die aufgezeigten Nachteile der bisherigen Anlagen zu vermeiden, was dadurch erreicht wird, dass zur direkten Antriebsverbindung der beiden Maschinen ein Fluidgetriebe angeordnet ist.

Auf Grund der Kraftübertragung mittels eines Fluids ergeben sich folgende Vorteile: Aufteilung des vorhandenen Energiepotentials auf viele kleinere Pumpen oder Verdichter; leicht herzustellende Kraftwerke, wobei bei Wasserkraftwerken keine Dichtungsprobleme mit dem Generator auftreten; örtlich verteilte Energiewandler arbeiten auf einen oder mehreren Generatoren od. dgl., z.B. Sägen oder ähnliches; Standardisierung von Kleinwasserkraftwerken; Drehzahl der Turbinen wird den örtlichen Gegebenheiten angepasst; der oder die Generatoren können außerhalb des Wassers in leicht zugänglichen Räumen aufgestellt werden.

Da bei der neuen Entwicklung die dem Triebfluid, insbesondere dem Triebwasser entnommene Energie über eine Hydraulikanlage oder dgl. auf den oder die Generatoren übertragen wird, können auch die kostengünstigen und zuverlässigen Aggregate herkömmlicher Hydrauliksysteme zur Regelung herangezogen werden. Durch die mögliche Reduktion der Anzahl der Generatoren können die Kosten entscheidend verringert werden. Es können daher auch größere, aber auch Generatoren mit höheren Wirkungsgraden zum Einsatz kommen (Synchron- statt Asynchrongeneratoren). Durch Verringerung der Einheiten auf der Generatorseite reduzieren sich auch die Kosten der nachgeschalteten Schutz- und Regeleinrichtungen.

Die Anpassung der Turbinen an geänderte Volumenströme und Fallhöhen kann sehr einfach über die Drehzahlregelung der Pumpen (oder Verdichter) des Fluidgetriebes erfolgen. Trotz einfacher Konstruktionen lassen sich damit gute Turbinenwirkungsgrade über einen breiten Anwendungsbereich erzielen (Propellerturbinen).

Eine mögliche Ausführungsform einer erfindungsgemäßen Anlage besteht im wesentlichen darin, dass ein oder mehrere Strömungsmaschinen in einer Strömung, beispielsweise eines Flusses, Gerinnes, Kanals, Baches, einer Gezeiten-, Thermik-, Wind-, oder Gasströmung angeordnet sind.

Die Strömungsmaschine und die Pumpe oder der Verdichter des Fluidgetriebes bilden eine Einheit und sind entlang einer Führungseinrichtung befestigt. Diese kann beispielsweise aus einer oder mehreren Führungsstange(n) bestehen, die zugleich auch als Montagehilfe genützt werden kann/können. Werden mehrere Führungsstangen verwendet, so kann bei entsprechender Anordnung die Strömungsmaschine auch bei starker Strömung wirksam in ihrer Lage fixiert werden.

Es ist vorteilhaft, wenn die Führungsstange als Rohr mit kreisförmigen, elliptischen, rechteckigen oder quadratischen Querschnitt ausgebildet ist. Dadurch kann der Hohlraum der Führungsstangen verwendet werden, um in geeigneten Sammelleitungen das energieübertragende Fluid zu- und abführen zu können. Mit dieser Ausführungsform kann erreicht werden, dass die Führungsstange einerseits für das energieübertragende Fluid, andererseits als Schutzrohr für die Elektro- und Datenkabel nutzbar ist. Weiters wird hiermit wirksam eine Beschädigung z.B. eine Verdellung verhindert.

Die Strömungsmaschinen können an der Führungsstange mit Führungsringen verbunden sein. Mit einer umschließenden Schutz- und Stützvorrichtung beispielsweise in Form eines Rohres, Blechmantels, u.dgl. ist sichergestellt, dass diese lagefixiert sind und den dynamischen Belastungen der Strömung wie auch den Umwelteinflüssen, z.B. Treibholz widerstehen und keine Zerstörung der Einrichtungen eintreten.

Ist ein Teil der Führungsstange und der Führungsring als Kupplung ausgebildet, so kann auch das energieübertragende Fluid zu und von der Pumpe oder des Verdichters des Fluidgetriebes übertragen werden.

Herkömmliche Absperrarmaturen und Rückschlagklappen verhindern ein Austreten des energieübertragenden Fluids bei entkuppeltem Führungsring.

Die Führungsstangen, Führungsringe, Sammelleitungen, Schaufeln der Strömungsmaschinen u.dgl. können beispielsweise aus Polypropylen, Polyethylen, glasfaserverstärktem Kunststoff, Metall, Edelstahl insbesondere rostfreiem Stahl hergestellt sein. Sind die voran genannten Komponenten aus rostfreiem Stahl aufgebaut, so ist eine besonders hohe Korrosionsfestigkeit gegeben, selbst wenn in die Strömung aggressive Stoffe gelangen.

Ist die Sammelleitung mit einem Wärmetauscher verbunden, so kann das Wärme- bzw. Kühlpotential der Strömung genutzt werden. Dieses kann z.B. auch unter Verwendung einer Wärmepumpe zur Brauchwassererwärmung oder einer Kältemaschine zur Kaltwassererzeugung erfolgen.

Ist die Wärmepumpe bzw. Kältemaschine mit einem Latentwärmespeicher verbunden, so besteht die Möglichkeit, mit der thermischen Energie aus den genannten Aggregaten den Speicher aufzuladen und kurz- bzw. langfristig die Wärme- oder Kälteenergie zu entnehmen. Latentwärmespeicher besitzen den großen Vorteil, dass in einem geringen Volumen relativ große Wärmemengen gespeichert werden können, da beispielsweise die Wärme bzw. Kälte, die durch Phasenumwandlungen gebunden und freigesetzt werden kann, zum Einsatz kommt.

Ist die Sammelleitung mit den Abwärmetauschern von Generatoren, Transformatoren, Verbrennungsmotoren, Turbinen u.dgl. verbunden, können dieselben auch mit dem zirkulierenden Fluid gekühlt werden.

Verändert das Fluid bei Temperaturänderung seine Viskosität, so können dadurch die Regeleigenschaften der energieerzeugenden Einrichtungen verändert werden. Dadurch kann sichergestellt werden, dass die Energieerzeugung der Wasserführung beispielsweise eines Flusses optimal angepasst wird. Es ist zweckmäßig, wenn alle Faktoren, Parameter und Informationen, wie z.B. Fallhöhe und Durchfluss der Strömung, Temperatur des Fluids, welches ein Maß für dessen Viskosität ist, zur weiteren energetischen Optimierung einem elektronischen Steuer- und Regelsystem zugeführt werden.

Es ist bekannt, dass in der warmen Jahreszeit, z.B. im Sommer die Flüsse witterungsbedingt durch Schneeschmelze und Regenfälle eine stärkere Wasserführung erreichen als in der kalten Jahreszeit, z.B. im Winter. Dies trifft nicht nur für Mitteleuropa und ähnliche geographische Gebiete zu. Normalerweise beeinflusst die Wasserführung der Flüsse die Regenzeit durch im Winter mehr Wasser als im Sommer.

Weist das Fluid bei hohem Temperaturniveau eine geringe Zähigkeit auf, so ist dessen Durchflusswiderstand im Motor sehr gering. Diese Eigenschaft kann besonders im Sommer genutzt werden, da der geringe Widerstand des Motors der stärkeren Wasserführung keinen Widerstand entgegensetzt und dadurch die großen Wassermengen mit hoher Strömungsgeschwindigkeit zum Erreichen einer wirtschaftlich sinnvollen Energieausbeute führen.

Im Gegensatz hierzu weist Fluid bei niedrigem Temperaturniveau eine hohe Zähigkeit auf, so ist der Durchflusswiderstand im Fluidgetriebe sehr hoch. Diese Eigenschaft kann besonders vorteilhaft im Winter genutzt werden, da der hohe Widerstand des Fluidgetriebes die Wasserströmung immer mehr zurückhält. Dies führt zu einem Aufstau der Strömung und zu einer Steigerung der Fallhöhe, die zum Erreichen einer wirtschaftlich sinnvollen Energieausbeute notwendig ist.

Wird das Temperaturniveau mit einem Wärmetauscher gesteigert oder gesenkt, so kann dem Fluidgetriebe ein Fluid unterschiedlicher Viskosität zugeführt werden. Dadurch kann gezielt auf den Durchflusswiderstand Einfluss genommen werden. Im weiteren Zusammenhang wird dadurch die Strömungsgeschwindigkeit, die Fallhöhe und die Energieausbeute geregelt.

Die Turbinenanordnung hat einen wesentlichen Einfluss auf die Tragkonstruktion. Es ist zweckmäßig auch die Führungseinrichtung in die Tragkonstruktion einzubinden, wobei beispielsweise die einzelnen Führungsstangen einerseits im Flussbett und andererseits an der Tragkonstruktion verankert werden können. Die Tragkonstruktion kann über einen Fluss, ein Gerinne, einen Bach, Kanal, u.dgl. gebaut sein und beide Ufer verbinden. Die Tragkonstruktion kann auch die Eigenschaften einer Mehrzweckanlage erfüllen.

Ist die Tragkonstruktion in Form einer Brücke, Steg, u.dgl. aufgebaut, so kann sie als Verkehrsweg genutzt werden. Besonders vorteilhaft ist es, wenn dieser Verkehrsweg neben der Nutzung durch Fußgänger und Radfahrer auch für die Arbeitsfahrzeuge zur Erfüllung der betrieblichen Aufgaben genutzt werden kann. Auch das Befahren durch Sonderfahrzeuge wie Feuerwehr, Rettung oder andere dem menschlichen Leben dienliche Einsatzfahrzeuge kann bei geeigneter statischer Ausbildung der Tragkonstruktion möglich sein.

Die Brücke, der Steg od. dgl. kann auch überflutbar sein.

Besonders hoch ist die Energieausbeute, wenn der Strömungsquerschnitt durch eine Schleuseneinrichtung verändert wird und dadurch einerseits die Strömungsgeschwindigkeit und andererseits durch den Aufstau der Strömung auch die Fallhöhe wesentlich gesteigert wird.

Eine weitere Nutzung der Tragkonstruktion kann auch durch den Einbau einer Schiffsanlegestelle oder eines Bootssteges gegeben sein.

Nachstehend wird die Erfindung anhand von in den Zeichnungen dargestellten Ausführungsbeispielen näher beschrieben, ohne auf diese Beispiele beschränkt zu sein. Dabei zeigen;
Fig. 1 einen schematischen Schaltplan einer erfindungsgemäßen Anlage;
Fig. 2 die schematische Vorderansicht der Turbinen einer Anlage nach der Erfindung;
Fig. 3 schematisch eine teilweise geschnittene Draufsicht der Anlage nach Fig. 2;
Fig. 4 einen Querschnitt durch eine Ausführungsform mit Brücke, Führungsstangen und Strömungsmaschinen;
Fig. 5 eine alternative Anordnung der Strömungsmaschinen;
Fig. 6 die Funktion der Führungsstange beim Einbau der Strömungsmaschine im horizontalen Querschnitt;
Fig. 7 die Funktion der Führungsstange beim Einbau der Strömungsmaschine im vertikalen Querschnitt;

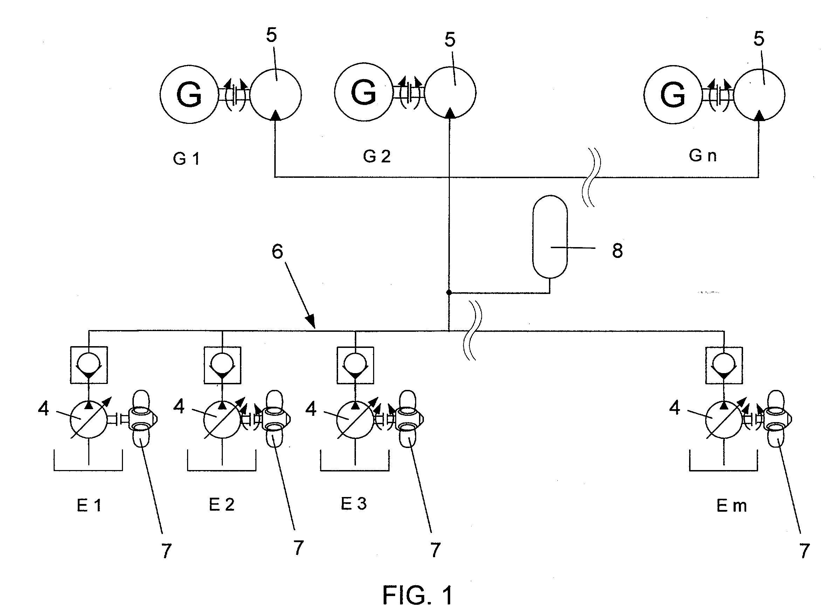

Gemäß Fig. 1 sind die Einheiten E1, E2, E3 ..... Em über Fluidgetriebe mit den elektrischen Generatoren G1, G2.... Gn gekuppelt. Jedes Fluidgetriebe besteht aus einer Pumpe oder einem Verdichter 4, einem Motor 5 und zugehörigen Leitungen 6, in denen das Fluid zur Leistungsübertragung umläuft. Die Leistung der Strömungsmaschinen 7 wird daher über die Fluidgetriebe 4, 5, 6 auf die elektrischen Generatoren übertragen. In die Leitungen 6 ist ein Druckspeicher 8 eingeschaltet. Als Motor 5 könnte auch ein Turbinenrad, z.B. eine Peltonturbine eingesetzt werden.

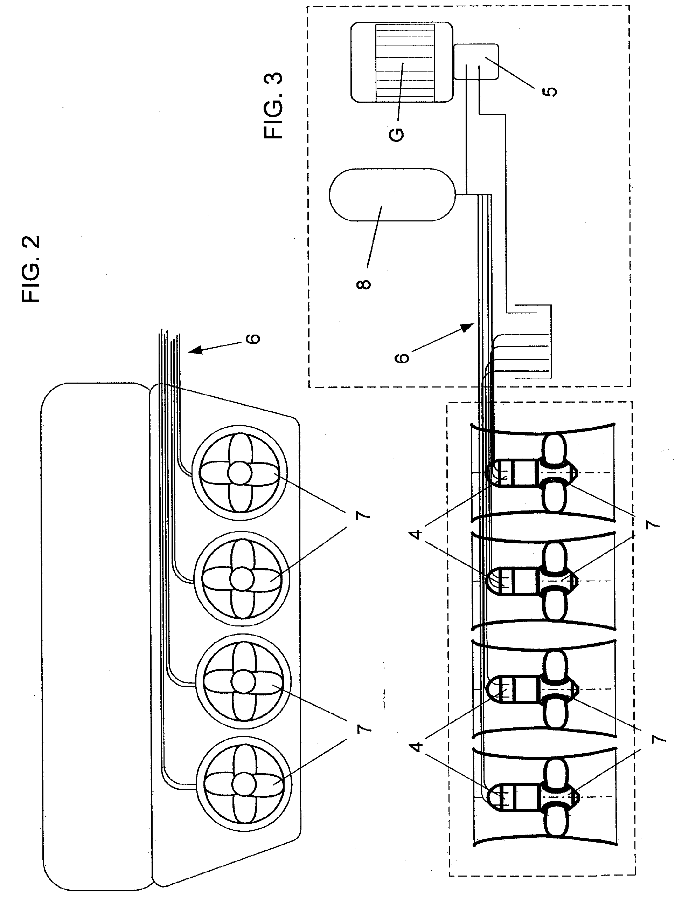

Bei der Ausführungsform nach den Fig. 2 und 3 sind vier Strömungsmaschinen 7 vorgesehen, die als Wasserkraftmaschinen oder als Windkraftmaschinen ausgebildet sind und deren damit gekuppelte Pumpen 4 (oder Verdichter) über die Leitungen 6 mit einem Motor 5 verbunden sind, der mit einem Generator G gekuppelt ist.

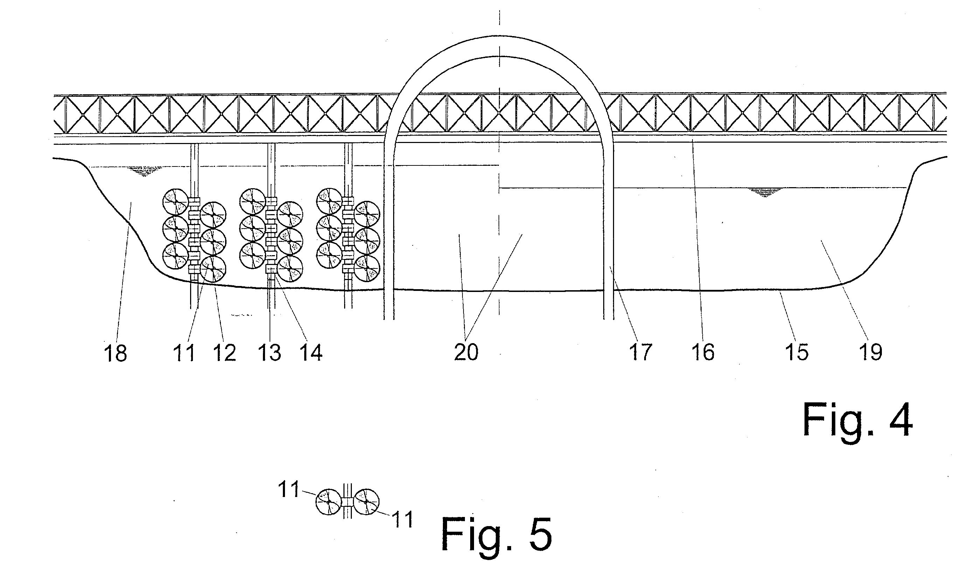

Bei dem in Fig. 4 dargestellten Querschnitt einer möglichen Ausführungsform sind die Strömungsmaschinen 11 von einer Schutz- und Stützvorrichtung 12 umschlossen. Diese kann ggf. durch ein Schutzgitter am Ein- und Austritt zusätzlich geschützt werden.

Die Schutz- und Stützvorrichtungen 12 der Strömungsmaschinen 11 sind an einer Führungsschiene 13 mitttels einer beweglichen Haltevorrichtung 14 z.B. einem Ring, einer Hülse, Bandage u.dgl. geführt.

Die einzelnen als Führungsstangen 13 ausgebildeten Führungsschienen sind unterhalb der Strömungsmaschinen 11 beispielsweise in einem Flussbett 15 verankert und oberhalb der Strömungsmaschinen 11 an einer Tragkonstruktion 16 lagefixiert, die bei großen Spannweiten durch eine zusätzliche Stützkonstruktion 17 stabilisiert werden kann.

Die Strömungsmaschine 11 sind zweckmäßig in maximal hoher Anzahl im durchströmten Querschnitt anzuordnen, wobei unterhalb der Wasseroberfläche ein genügend großer Abstand zu den Strömungsmaschinen einzuhalten ist, um das mit der Strömung mitgeführte Treibholz gefahrlos abführen zu können.

Die Fig. 4 zeigt auf der linken Hälfte der Darstellung den oberwasserseitigen Querschnitt 18, auf der rechten Hälfte ist der unterwasserseitige Querschnitt 19 dargestellt. Eine Fallhöhe zwischen oberwasserseitigem und unterwasserseitigem Querschnitt ist erreichbar, wenn für den wassergebundenen Verkehr beispielsweise ein Schleusenbereich 20 angeordnet wird und dadurch der Aufstau der Strömung wesentlich gesteigert wird.

In Fig. 5 ist eine Variante der Haltevorrichtung 14 dargestellt, die eine Anordnung der Strömungsmaschinen 11 in jeweils einer horizontalen Ebene ermöglicht.

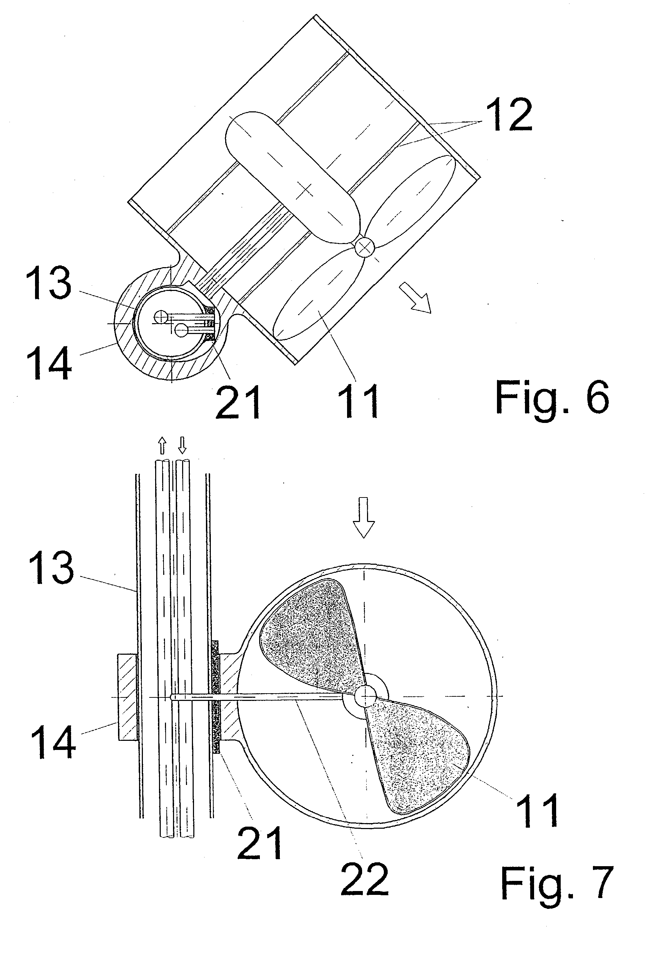

In den Fig. 6 und 7 ist die Funktion der Führungsstange 13 und der Einbau der Strömungsmaschinen 11 mit den Pumpen (Verdichtern) 4 im Detail dargestellt. Die Haltevorrichtung 14 wird in einem in Fig. 6 dargestellten Winkel von 45 ° gegenüber der in Fig. 7 dargestellten Betriebsposition auf die Führungsstange 13 aufgesetzt und in Richtung ihrer Betriebsposition bewegt. Oberhalb der Betriebsposition wird die Haltevorrichtung 14 einschließlich der mit ihr verbundenen Schutz- und Stützvorrichtung 12 samt der damit verbundenen Strömungsmaschine 11 um 45 ° geschwenkt und auf den Keil 21 lagefixiert aufgeschoben. Gleichzeitig wird mit diesem Vorgang eine paßgenaue Verbindung für die Zu- und Abführung des Fluids hergestellt, welches durch die Sammelleitungen 22 zirkuliert.

Im Rahmen der Erfindung sind zahlreiche Abänderungen möglich. So könnten die Strömungsmaschinen 7 bzw. 11 z.B. auch Windkraftmaschinen sein, die mit den Pumpen oder Verdichtern 4 gekuppelt sind.

## Patentansprüche

1. Anlage mit einer als Strömungsmaschine ausgebildeten Kraftmaschine (7,11) und einer hievon angetriebenen Maschine, insbesondere einem elektrischen Generator (G), **dadurch gekennzeichnet, dass** zur direkten Antriebsverbindung der beiden Maschinen (7,11;G) ein Fluidgetriebe (4,5,6) angeordnet ist.

2. Anlage nach Anspruch 1, **dadurch gekennzeichnet, dass** mehrere Kraftmaschinen (7,11) mittels Fluidgetrieben (4,5,6) mit einer angetriebenen Maschine, insbesondere einem elektrischen Generator (G) verbunden sind.

3. Anlage nach Anspruch 1 oder 2, **dadurch gekennzeichnet, dass** von der direkten Fluidleitung (6) zwischen Kraftmaschine (7,11) und angetriebener Maschine (G) eine Leitung zu einem Druckspeicher (8) abzweigt.

4. Anlage nach einem der Ansprüche 1 bis 3, **dadurch gekennzeichnet, dass** als Fluid Hydrauliköl, Wasser oder Gase, insbesondere Luft, verwendet werden.

5. Anlage nach einem der Ansprüche 1 bis 4, **dadurch gekennzeichnet, dass** mehrere Strömungsmaschinen (7,11) in einer Strömung eines Fluids, z.B. eines Flusses, Gerinnes, Kanales, Baches, einer Gezeitenströmung, einer Thermikströmung oder einer Gasströmung, angeordnet sind.

6. Anlage nach Anspruch 5, **dadurch gekennzeichnet, dass** die Strömungsmaschinen (11) entlang einer Führungseinrichtung, insbesondere mindestens einer Führungsstange (13) befestigt sind.

7. Anlage nach Anspruch 6, **dadurch gekennzeichnet, dass** die Führungsstangen (13) als Rohr ausgebildet sind, durch das das energieübertragende Fluid und/oder ein Wärmemittel in Sammelleitungen geführt ist.

8. Anlage nach Anspruch 6 oder 7, **dadurch gekennzeichnet, dass** die Strömungsmaschinen (11) mit Führungsringen (14) versehen sind, welche die Führungsstangen (13) mindestens teilweise umgreifen, wobei Führungsstangen (13) und Führungsringe (14) als Kupplungsorgane ausgebildet sind.

9. Anlage nach einem der Ansprüche 5 bis 8, **dadurch gekennzeichnet, dass** ein Wärmetauscher vorgesehen ist, durch den das Fluid geleitet wird.

10. Anlage nach Anspruch 9, **dadurch gekennzeichnet, dass** das Fluid über eine Wärmepumpe oder eine Kältemaschine geleitet wird.

11. Anlage nach Anspruch 9, **dadurch gekennzeichnet, dass** die Wärmepumpe bzw. Kältemaschine mit einem Latentwärmespeicher verbunden ist.

12. Anlage nach einem der Ansprüche 6 bis 11, **dadurch gekennzeichnet, dass** die Führungseinrichtung (13)mit einer Tragkonstruktion (16) verbunden ist.

13. Anlage nach Anspruch 12, **dadurch gekennzeichnet, dass** die Tragkonstruktion (16) als Verkehrsweg, z.B. als Steg bzw. Brücke ausgebildet ist.

14. Anlage nach Anspruch 13, **dadurch gekennzeichnet, dass** der Steg bzw. die Brücke (16) mit einer Schleuseneinrichtung verbunden ist.

15. Anlage nach einem der vorstehenden Ansprüche, **dadurch gekennzeichnet, dass** die Viskosität des Fluids veränderbar ist

16. Anlage nach einem der vorstehenden Ansprüche, **dadurch gekennzeichnet, dass** die Konstruktionsteile aus nichtrostenden Werkstoffen, insbesondere rostfreiem Stahl aufgebaut sind.

17. Anlage nach einem der vorstehenden Ansprüche, **dadurch gekennzeichnet, dass** die Konstruktion überflutbar ist.
